# EUROPEAN PATENT SPECIFICATION

(11) **EP 1 657 982 B1**
(45) Date of publication and mention of the grant of the patent: **13.06.2007**
(21) Application number: 04763929.9
(22) Date of filing: 09.08.2004
(51) Int. Cl.: A23F 3/40, A23F 5/46

(54) **INFUSION SYSTEM FOR ENHANCED FLAVOR BEVERAGES**
INFUSIONSSYSTEM FÜR GETRÄNKE MIT VERBESSERTEM GESCHMACK
SYSTEME D'INFUSION POUR BOISSONS ENRICHIES EN AROME

(30) Priority: 27.08.2003 US 648618
(43) Date of publication of application: 24.05.2006
(73) Proprietor: UNILEVER PLC, London, Greater London EC4P 4BQ (GB); UNILEVER N.V., 3013 AL Rotterdam (NL)
(72) Inventor: LEHMBERG, Gregg L., Unilever Bestfoods N. America, Englewood Cliffs, New Jersey 07632 (US); HERZOG, Leslie J., Unilever Bestfoods N. America, Englewood Cliffs, New Jersey 07632 (US)
(74) Representative: Hugot, Alain
(86) International application number: PCT/EP2004/008905
(87) International publication number: WO 2005/020700

(56) References cited:
- EP-A- 0 001 460
- EP-A- 0 011 324
- EP-A- 0 560 609
- DE-A- 19 919 711
- US-A- 4 076 847
- US-A- 4 496 596
- US-A- 5 932 260

## Description

### FIELD OF THE INVENTION

The present invention is directed to infusible or water soluble material in combination with aroma compounds. More particularly, the present invention is directed to infusible or water soluble material in combination with aroma compounds wherein the infusible or water soluble material is a powder, or packed or placed in filter paper and contacted with water in order to brew a beverage having good flavor, and further wherein the aroma compounds are carried on carrier compounds, and mixed with or sprayed onto the infusible or water soluble material, or a combination thereof. Unexpectedly, the present invention results in a beverage having good flavor characteristics, even when a reduced amount of infusible or water soluble material is employed.

### BACKGROUND OF THE INVENTION

When making beverages, such as tea or coffee based beverages, it is common to use filter paper with tea leaf or ground coffee in, for example, urns in order to infuse the same to make the desired beverage. It is also common to prepare sachets or bags that contain tea leaf or ground coffee, as the case may be, and infuse the same in a brewing apparatus or on a cup-by-cup basis.

Some consumers choose not to drink tea and coffee since they are conscious of their intake of caffeine. Other consumers drink decaffeinated beverages; however, such decaffeinated products tend to have flavor and aroma characteristics that are inferior to beverages having their natural level of alkaloids. Hot chocolate or cocoa, on the other hand, is often not desired because it is high in calories and carbohydrates. It is of increasing interest to develop a beverage that has reduced levels of caffeine, calories or both, yet is good tasting. This invention, therefore, is directed to infusible or water soluble material in combination with aroma wherein the infusible or water soluble material is a powder or packed or placed in (or on) filter paper and contacted with an aqueous solvent (preferably, water) in order to brew a beverage having good flavor and further wherein the aroma compounds are carried on carrier compounds, and mixed with or sprayed onto the infusible or water soluble material, or a combination thereof. Unexpectedly, the present invention results in a beverage having good flavor characteristics, even when a reduced amount of infusible or water soluble material is employed.

### ADDITIONAL INFORMATION

Efforts have been disclosed for making infusible beverage precursors. In U.S. Patent No. 2,769,290, a method and apparatus for making tea bags or the like are described.

Other efforts have been disclosed for making infusible beverage precursors. In U.S. Patent No. 2,793,120, large sized tea bags are described.

Still other efforts have been disclosed for making infusible beverage precursors. In U.S. Patent No. 5,366,741, infusion packets with a V-fold are described.

None of the additional information above describes infusible or water soluble material in combination with aroma compounds wherein the same can be used to prepare a beverage having good flavor characteristics, even when reduced amounts of the infusible or water soluble material is employed.

### SUMMARY OF THE INVENTION

In a first aspect, the present invention is directed to a beverage precursor comprising:
c) an infusible or water soluble material selected from the group consisting of decaffeinated tea leaf, decaffeinated tea particulates and a mixture thereof; and
d) aroma compound
wherein the infusible or water soluble material is present at a level that is from 0.5 to 25.0% by weight less than the conventional amount used for a six to eight ounce (170 to 227 g) serving (i.e., a level of from 1.42 to 1.89 g for decaffeinated tea leaf, and from 0.225 to 0.299 g for decaffeinated tea particulates); and the aroma compound is an additive and not supplied with the infusible, or water soluble material.

The beverage precursor is a powder, packed in a serving pack, sachet, bag, or used with filter paper, and the aroma compounds are carried on carrier compounds, and mixed with or sprayed onto the infusible or water soluble material, or a combination thereof.

In a second aspect, the present invention is directed to a beverage made with the beverage precursor of the first aspect of this invention.

In a third aspect, the present invention is directed to a method for making a beverage with the beverage precursor of this invention.

Infusible material means suitable to wet, steep with, percolate, or soak in an aqueous solvent, like water, to generate a beverage. Water soluble material means suitable to dissolve in water to generate a beverage, like a serving pack of hot chocolate powder, or freeze dried or instant coffee or tea (i.e., coffee or tea particulates) . Beverage means a drink suitable for humans other than water, and preferably, coffee or tea, and most preferably, tea. Aroma compound means volatile compounds capable of generating a pleasant odor, including natural or artificial aroma compounds. Tea means derived from *Camellia sinensis.* Aqueous solvent, when used herein, is meant to include hot (e.g., greater than about 60°C) and cold (e.g., less than about 15°C) water. Carried on carrier compounds means, for example, carried as a core (i.e., encapsulated) or carried within a matrix. Reduced amount, as used herein, means from about 0.5 to about 25.0%, and preferably, from about 5.0 to about 20.0%, and most preferably, from about 8.0 to about 15.0% by weight less than the conventional amount of infusible or water soluble material used, as the case may be, to make about a six (6) to about an eight (8) ounce serving. Conventional amount used to make about a 6 to about an 8 ounce serving with tea leaf, ground coffee, coffee particulates, tea particulates, herb and cocoa means about 1.90-2.50 grams, about 3.5-6.5 grams, about 1.40- 2.40 grams, about 0.30-0.90 grams, about 1.0-2.50 and about 1.85-4.5 grams, respectively.

### DETAILED DESCRIPTION OF THE PREFERRED EMBODIMENTS

There is no limitation with respect to the type of beverage made from the beverage precursor of this invention other than that the beverage is suitable for human consumption. Illustrative examples of the types of beverages which may be made from the beverage precursor of this invention include, without limitation, tea, coffee, herb tea and hot chocolate, all of which may be with or without caffeine and other alkaloids.

The aroma compounds suitable for use in this invention can be natural or artificial aroma compounds, like those isolated from tea leaf, coffee bean or cocoa bean, but preferably, tea leaf. The composition of tea aroma compounds is known to be rather complex, and is believed to comprise approximately 500 to 650 compounds. Illustrative examples of the general classes of aroma compounds typically isolated and suitable for use in this invention include, without limitation, hydrocarbons, aldehydes, alcohols (including arylols), esters (including lactones), ketones, acids, heterocompounds, mixtures thereof and the like. Specifically, aroma compounds suitable for use in this invention include 1-pentanol, cis-2-penten-1-ol, cis-3-hexen-1-ol, 1-hexanol, benzyl alcohol, phenylethanol, geraniol, merolidol, linalool, hexanal, trans-2-hexenal, furfural, methyl furfural, heptadienal, benzaldehyde, phehylacetaldehyde, linalool oxide 1, linalool oxide 2, beta ionone, methyl salicylate, ethyl decanoate, mixtures thereof, and the like.

Other aroma compounds suitable for use with this invention include 3-hydroxy-4,5-dimethyl-2(5H)-furanone, 4-hydroxy-2,5-dimethyl-3(2H)-furanone, 4-hydroxy-5-methyl-3(2H)-furanone, 3-hydroxy-2-methyl-4(4H)-pyranone, 3-hydroxy-2-ethyl-4(4H)-pyranone, mixtures thereof and the like.

There is no limitation with respect to how the aroma compounds are made or isolated, as long as the same can be used with beverages suitable for human consumption. Preferred methods for isolating suitable aroma compounds include methods that employ cryogenic aroma recovery systems, vacuum stripping and distillation systems, essence recovery systems, and most preferably, spinning cone systems. The spinning cone systems most preferred to isolate flavor compounds are made commercially available from suppliers like ConeTech, Inc. and FlavourTech.

The filter paper suitable to make bags, sachets, or filters should be porous, and may be formed of polymeric or paper-like material generally including the characteristics of a mesh size somewhat smaller than the included infusible and water soluble material employed, and the desired carrier compounds comprising aroma compounds. The filter paper should act as a filtering means to accomplish the objectives of preventing the formation of sediment in the desired beverage. The paper thickness used can vary, but preferably is from about 0.004 cm to about 0.35 cm, and most preferably, from about 0.008 cm to about 0.025cm. The size of the pores in the paper preferred for use in the present invention can vary from about 4 µm to about 1200 µm, and preferably, is from about 15 µm to about 200 µm.

The paper used may be of any desired size and character, and for example, can be a sheet of the same folded over and attached along the three overlying contiguous edges. Bags of the type normally associated with the term "tea bags" are also useful in the present invention. In addition to bags designed for steeping, bags useful in the present invention include those designed for the percolation method of preparation, vacuum pot preparation and drip method of preparation. All that is necessary to adapt the bag to alternative methods of preparation is that the bag be of a shape and design compatible with the brewing method. Illustrative examples of the preferred bags suitable for use in this invention include, without limitation, the tea bags described in U.S. Patent Nos. 2,793,120 and 2,769,290, the disclosure of which are incorporated herein by reference.

The sachets suitable for use in this invention are limited only to the extent that they are of a size and shape consistent with the desired beverage brewing method. Such sachets can resemble tea bags deplete of their conventional tags and strings. The filters suitable for use with the beverage precursor of this invention are well known and typically made available from suppliers like Unilever Bestfoods under the Lipton Tea Brand. The serving packs can comprise foil and are available in many sizes, including single serving sizes.

The carried aroma compounds may be made by dissolving an inert gas like carbon dioxide in an aromatized edible liquid. The resulting aromatized, gasified liquid can then be co-extruded with a molten carbohydrate material, and preferably, one having a glass transition temperature of between 20°C and 80°C to provide a stream having an outer shell of material that surrounds an inner core of aromatized, gasified liquid. The stream can then be extruded into a pressure chamber with a pressure that is higher than the internal pressure of the inert gas in the aromatized liquid core, whereby the stream is maintained under the pressure until the carbohydrate shell has cooled to below its glass transition temperature to provide capsules with a hardened shell of amorphous carbohydrate glass surrounding an inner core of gasified, aromatized liquid. A more detailed description of the encapsulation of volatile aroma compounds is found in U.S. Patent No. 5,399,368, the disclosure of which is incorporated herein by reference.

Other methods for making carried aroma compounds include entrapping the aroma compound in a solidified matrix of dehydrated carrier achieved by well known processes that employ freeze drying, fluidized bed drying, or spray-drying systems. Such systems and techniques which employ the same are described in, for example, Spray-Drying Handbook, 4th ed., K. Masters, (1985). Still other methods include simply mixing the carrier and aroma compound. Another option for obtaining carried aroma compounds is to purchase the same from suppliers like International Flavors and Fragrances, Firmenich or Givaudan.

The carriers employed with the aroma compounds of this invention can include those comprising carbohydrates, such as starches (e.g. maltodextrin), chemically modified starches, emulsifying polymers, monomers and dimers of simple aldohexoses, mixtures thereof or the like.

Additional carriers that may be used in this invention include volatile organic carriers that are liquid at 25°C and atmospheric pressure and have a vapor pressure of at least 0.01 mmHg at 25°C, a boiling point in the range of 25 to 250°C, a density of less that 1.0 g/cc at 25°C, and water solubility of not more than about 10% at 25°C. Illustrative and non-limiting examples of the volatile organic carriers which may be used in this invention include 2-methylfuran, 2-ethylfuran, methyl hexanoate, heptanal, octanal, nonanal, ethyl formate, propylformate, mixtures thereof or the like.

When making the infusion system unexpectedly having good flavor characteristics, typically, the aroma compound employed typically makes up from about 0.01 to about 0.75%, and preferably, from about 0.015 to about 0.5%, and most preferably, from about 0.02 to about 0.1% by weight of the total weight of aroma compound and carrier compound in dry form, including all ranges subsumed therein.

The size of the aroma compound and carrier (i.e., aromatizing composition) is limited only to the extent that the aroma compound and carrier combination does not interface with the quality and characteristics of the beverage made. Often, the particle size (i.e., diameter) of the aromatizing composition is about 0.08 to about 15 mm, and preferably, from about 0.20 to about 7.0 mm, and most preferably, from about 0.30 to about 4.0 mm, including all ranges subsumed therein.

In an especially preferred embodiment, the absolute density of the aroma compound and the carrier compound (aromatizing composition) is from about 0.15 to about 0.99 g/cc, and preferably, from about 0.25 to about 0.96 g/cc, and most preferably, from about 0.3 to about 0.75 g/cc, including all ranges subsumed therein.

In yet another preferred embodiment, the packing efficiency of the aroma compound and the carrier compound (aromatizing composition) is from about 0.08 to about 0.92 g/cc, and preferably, from about 0.15 to about 0.85 g/cc, and most preferably, from about 0.20 to about 0.75 g/cc, including all ranges subsumed therein.

When making the beverage precursor, infusible or water soluble material (or both) is combined with aroma compound carried on or in the carrier compound. It is within the scope of this invention to employ conventional mixing (stirring or tumbling) techniques to combine the aromatizing composition and the infusible and/or water soluble material. It is also within the scope of this invention to spray the aroma and carrier compound directly onto the infusible or water soluble material. When spraying is the desired technique, often an aqueous emulsion (with an emulsifying agent like fatty-acid mono- or diglycerides, fatty acid esters with sorbitol) is prepared and sprayed with an air compressor. The pressure at which the emulsion is applied can vary, but the pressure is usually between about 1.5 and about 10.5 bars, and preferably, between about 2.5 and 5.5 bars. Since the water employed typically evaporates (even at ambient temperature) it is not a required step to dry the infusible or water soluble material after spraying.

The amount of dried aroma compound and carrier employed in this invention is typically from about 0.5 to about 25.0%, and preferably, from about 2.0 to about 30.0%, and most preferably, about 8.0 to about 15.0% by weight aroma compound, based on total weight of aroma compound, infusible material, water soluble material and carrier compound, and including all ranges subsumed therein.

In a preferred embodiment, the aroma compounds employed in this invention are tea aroma compounds. In an especially preferred embodiment, the tea aroma compounds described herein are used in decaffeinated tea bags wherein the aroma compounds are isolated from tea leaves prior to the same being decaffeinated.

It is also within the scope of this invention to employ conventional sweeteners, whiteners, flavors and/or spices in the beverage precursors and/or beverages described herein.

The following example is provided to facilitate an understanding of the present invention. The example is not provided to limit the scope of the claims.

### EXAMPLE

Decaffeinated tea bags were prepared by combining 1.70 grams of decaffeinated tea leaf (as prepared by Unilever Bestfoods) and 0.25g tea aroma compound on a maltodextrin carrier (as may be made commercially available by Givaudan). The resulting tea bags had over 10% less tea leaf then conventional decaffeinated tea bags. A taste panel was conducted to compare tea beverage prepared from the tea bags with aroma compound and tea beverage prepared from conventional decaffeinated tea bags. The beverages were made by infusing the tea bags with about eight ounces of water (at about 100°C). The resulting beverages were consumed after cooling to about 70-75°C. Fifty (50) panelists sampled the beverages, and unexpectedly, about two-thirds of the panelists preferred the tea beverage made according to this invention.

## Claims

1. A beverage precursor comprising:
c) an infusible or water soluble material selected from the group consisting of decaffeinated tea leaf, decaffeinated tea particulates and a mixture thereof; and
d) aroma compound
wherein the infusible or water soluble material is present at a level of from 1.42 to 1.89 g for decaffeinated tea leaf, and from 0.225 to 0.299 g for decaffeinated tea particulates; and the aroma compound is an additive and not supplied with the infusible or water soluble material.

2. The beverage precursor according to claim 1 wherein the infusible or water soluble material is present at a level of from 1.52 to 1.81 g for decaffeinated tea leaf, and from 0.240 0.285 g for decaffeinated tea particulates.

3. The beverage precursor according to claim 1 wherein the infusible or water soluble material is present at a level of from 1.61 to 1.75 g for decaffeinated tea leaf, and from 0.255 to 0.276 g for decaffeinated tea particulates.

4. The beverage precursor according to claim 1 wherein infusible material is present and the infusible material is decaffeinated tea leaf.

5. The beverage precursor according to claim 4 wherein the aroma compound is recovered from tea leaves, tea leaf before the tea leaf is decaffeinated, natural aroma compound or artificial aroma compound.

6. The beverage precursor according to any preceding claim wherein the beverage precursor is packed in a serving pack, sachet or bag.

7. The beverage precursor according to claim 6 wherein the beverage precursor is packed in a tea bag.

8. A 170 to 227 g (six to eight ounce) beverage composition, the beverage composition made by contacting an aqueous solution and a beverage precursor according to any preceding claim.

9. A method for making a beverage comprising, in no particular order, the steps of:
(i) obtaining an aqueous solution; and
(ii) contacting the aqueous solution with a beverage precursor according to any one of claims 1 to 7.

10. The method for making a beverage according to claim 9 wherein the aqueous solution is water that is greater than 60°C or less than 15°C.

## Patentansprüche

1. Getränkevorläufer, umfassend:
a) ein aufgießbares oder wasserlösliches Material, ausgewählt aus der Gruppe bestehend aus entkoffeiniertem Teeblatt, entkoffeinierten Teeteilchen und einem Gemisch daraus; und
b) Aromaverbindung,
worin das aufgießbare oder wasserlösliche Material bei einem Grad von 1,42 bis 1,89 g für entkoffeiniertes Teeblatt und von 0,225 bis 0,299 g für entkoffeinierte Teeteilchen vorhanden ist; und die Aromaverbindung ein Zusatzmittel ist und nicht mit dem aufgießbaren oder wasserlöslichen Material geliefert wird.

2. Getränkevorläufer gemäß Anspruch 1, worin das aufgießbare oder wasserlösliche Material bei einem Grad von 1,52 bis 1,81 g für entkoffeiniertes Teeblatt und von 0,240 bis 0,285 g für entkoffeinierte Teeteilchen vorhanden ist.

3. Getränkevorläufer gemäß Anspruch 1, worin das aufgießbare oder wasserlösliche Material bei einem Grad von 1,61 bis 1,75 g für entkoffeiniertes Teeblatt und von 0,255 bis 0,276 g für entkoffeinierte Teeteilchen vorhanden ist.

4. Getränkevorläufer gemäß Anspruch 1, worin aufgießbares Material vorhanden ist und das aufgießbare Material entkoffeiniertes Teeblatt ist.

5. Getränkevorläufer gemäß Anspruch 4, worin die Aromaverbindung gewonnen aus Teeblättern, Teeblatt, bevor das Teeblatt entkoffeiniert wird, natürliche Aromaverbindung oder künstliche Aromaverbindung ist.

6. Getränkevorläufer gemäß einem vorhergehenden Anspruch, worin der Getränkevorläufer in einem Portionspäckchen, Sachet oder Beutel verpackt ist.

7. Getränkevorläufer gemäß Anspruch 6, worin der Getränkevorläufer in einem Teebeutel verpackt ist.

8. 170 bis 227 g (sechs bis acht Unzen) Getränkezusammensetzung, wobei die Getränkezusammensetzung durch Kontaktieren einer wässerigen Lösung und eines Getränkevorläufers gemäß einem vorhergehenden Anspruch hergestellt ist.

9. Verfahren zum Herstellen eines Getränks, umfassend in keiner besonderen Reihenfolge die Schritte:
(i) Erhalten einer wässerigen Lösung; und
(ii) Kontaktieren der wässerigen Lösung mit einem Getränkevorläufer gemäß einem der Ansprüche 1 bis 7.

10. Verfahren zum Herstellen eines Getränks gemäß Anspruch 9, worin die wässerige Lösung Wasser ist, das höher als 60°C oder geringer als 15°C ist.

## Revendications

1. Précurseur de boisson comprenant :
a) un matériau qui peut infuser ou soluble dans l'eau choisi dans le groupe constitué de feuilles de thé décaféiné, particules de thé décaféiné et d'un mélange de ceux-ci ; et
b) un composé d'arôme
dans lequel le matériau qui peut infuser ou soluble dans l'eau est présent à un niveau allant de 1,42 à 1,89 g pour des feuilles de thé décaféiné, et de 0,225 à 0,299 g pour des particules de thé décaféiné ; et le composé d'arôme est un additif et il n'est pas fourni avec le matériau qui peut infuser ou soluble dans l'eau.

2. Précurseur de boisson selon la revendication 1, dans lequel le matériau qui peut infuser ou soluble dans l'eau est présent à un niveau allant de 1,52 à 1,81 g pour des feuilles de thé décaféiné, et de 0,240 à 0,285 g pour des particules de thé décaféiné.

3. Précurseur de boisson selon la revendication 1, dans lequel le matériau qui peut infuser ou soluble dans l'eau est présent à un niveau allant de 1,61 à 1,75 g pour des feuilles de thé décaféiné, et de 0,255 à 0,276 g pour des particules de thé décaféiné.

4. Précurseur de boisson selon la revendication 1, dans lequel le matériau qui peut infuser est présent et le matériau qui peut infuser est une feuille de thé décaféiné.

5. Précurseur de boisson selon la revendication 4, dans lequel le composé d'arôme est récupéré à partir de feuilles de thé, de feuilles de thé avant que la feuille de thé ne soit décaféinée, d'un composé d'arôme naturel ou d'un composé d'arôme artificiel.

6. Précurseur de boisson selon l'une quelconque des revendications précédentes, dans lequel le précurseur de boisson est emballé dans un emballage en portion, un sachet ou un sac.

7. Précurseur de boisson selon la revendication 6, dans lequel le précurseur de boisson est emballé dans un sac de thé.

8. Composition de boisson de 170 à 227 g (six à huit onces), la composition de boissons étant créée par contact d'une solution aqueuse et d'un précurseur de boisson selon l'une quelconque des revendications précédentes.

9. Procédé de création d'une boisson comprenant, sans ordre particulier, les étapes consistant à :
(i) obtenir une solution aqueuse ; et
(ii) mettre en contact la solution aqueuse avec un précurseur de boisson selon l'une quelconque des revendications 1 à 7.

10. Procédé de création d'une boisson selon la revendication 9, dans lequel la solution aqueuse est l'eau, et elle a une température supérieure à 60 °C ou inférieure à 15 °C.
